(19) Europäisches Patentamt / European Patent Office / Office européen des brevets

(11) **EP 2 529 873 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(51) Int Cl.:
*B23K 9/09* ^(2006.01)     *B23K 9/10* ^(2006.01)
*B23K 9/16* ^(2006.01)     *B23K 9/173* ^(2006.01)

(21) Anmeldenummer: **11168020.3**

(22) Anmeldetag: **30.05.2011**

(54) **Lichtbogenprozesssteuereinheit zur Steuerung der Lichtbogenstromstärke bei Pulsschweissen unter Schutzgas; Verfahren zum Pulsschweissen unter solcher Prozesssteuerung**

Arc processing control unit for controlling the arc welding flow strength for pulse welding using a protective gas ; Process of pulse welding using such process control

Unité de commande de la force d'un courant d'arc lumineux dans des soudures à impulsions sous gaz de protection ; Procédé de soudage pulsé utilisant un tel contrôle de procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.12.2012 Patentblatt 2012/49**

(73) Patentinhaber: **EWM Hightec Welding GmbH**
**56271 Mündersbach (DE)**

(72) Erfinder:
• **Szczesny, Michael**
**56271 Mündersbach (DE)**

• **Huismann, Gerd, Dr.-Ing.**
**22045 Hamburg (DE)**

(74) Vertreter: **Cohausz & Florack**
**Bleichstraße 14**
**40211 Düsseldorf (DE)**

(56) Entgegenhaltungen:
EP-B1- 1 216 780     CN-A- 101 125 389
JP-A- 2 290 674     JP-A- 2000 079 479
US-A- 3 995 138     US-A- 5 643 479
US-A1- 2010 181 296

**Beschreibung**

Die Erfindung betrifft eine Lichtbogenprozesssteuereinheit für ein Lichtbogenschweißgerät mit einer abschmelzenden Elektrode zum Schweißen unter Schutzgas gemäß dem Oberbegriff des Anspruchs 1 (siehe, z.B., US 5 643 479). Dabei ist die Lichtbogenprozesssteuereinheit eingerichtet, die Lichtbogenstromstärke dahingehend zu steuern, dass ein Pulsschweißprozess durchgeführt wird, wobei der Pulsschweißprozess zumindest eine Pulsstromphase, in der die Lichtbogenstromstärke zumindest zeitweise oberhalb einer kritischen Stromstärke liegt, und eine Grundstromphase, in der die Lichtbogenstromstärke bei einer Grundstromstärke liegt, umfasst.

Ebenso betrifft die Erfindung ein Verfahren zum Pulsschweißen unter Schutzgas mit einer abschmelzenden Elektrode gemäß dem Oberbegriff des Anspruchs 8.

Der Einfachheit halber, werden hier stets das Lichtbogenschweißen und das Lichtbogenlöten unter der Bezeichnung Lichtbogenschweißen zusammengefasst. Entsprechend wird unter einem Lichtbogenschweißgerät auch ein Gerät zum Lichtbogenlöten verstanden.

Es existieren zahlreiche verschiedene Lichtbogenschweißverfahren. Einige von ihnen arbeiten mit einer abschmelzenden Elektrode unter Schutzgas. Beim Schweißen bewirkt das Schutzgas die Abschirmung der abschmelzenden Elektrode, des Lichtbogens und des Schweißbads gegen die Atmosphäre. Zu den Lichtbogenschweißverfahren, bei denen eine abschmelzende Elektrode eingesetzt und unter Schutzgas gearbeitet wird, zählt das Metallschutzgasschweißen (MSG-Schweißen). MSG-Schweißverfahren zeichnen sich dadurch aus, dass der Lichtbogen zwischen einer abschmelzenden Elektrode, die gleichzeitig einen Schweißzusatz darstellt, und dem in Bearbeitung befindlichen Werkstück brennt. MSG-Schweißverfahren sind mit dem Metall-Inertgasschweißen (MIG-Schweißen) und dem Metall-Aktivgasschweißen (MAG-Schweißen) in zwei grundlegende Verfahrensarten untergliederbar. Beim MSG-Schweißen kann die abschmelzende Elektrode durch einen Draht gebildet werden, dessen Vorschub automatisch durch eine Drahtfördervorrichtung erfolgt.

Für ein optimales Schweißergebnis ist von erheblicher Bedeutung, dass ein möglichst gleichmäßiger Werkstoffübergang von der Elektrode zum Werkstück erfolgt. Daher wird angestrebt, dass der Elektrodenwerkstoff in Tropfen gleichbleibender Größe, die in regelmäßigen Zeitabständen übergehen, erfolgt.

Bei geringen Schweißstromstärken stellt sich der sogenannte Kurzlichtbogen ein. Beim Kurzlichtbogenprozess geht der Werkstoff ausschließlich im Kurzschluss über, wenn der Tropfen durch die kontinuierliche Drahtzufuhr und durch das Tropfenwachstum die Schmelzbadoberfläche berührt. Dabei verlischt der Lichtbogen und zündet wieder, wenn der Tropfen in Folge des hohen Kurzschlussstromes abgeschnürt ist. Nachteilig beim Kurzlichtbogenprozess ist die verstärkte Neigung zur Spritzerbildung.

Bei einer Erhöhung des Schweißstromes tritt ab einer kritischen Stromstärke der kurzschlussfreie Werkstoffübergang auf. Die kritische Stromstärke ist vom Material und vom Durchmesser der abschmelzenden Elektrode abhängig. In einem Übergangslichtbogenbereich, dem sogenannten Mischlichtbogen, geht dennoch der Tropfen teilweise im Kurzschluss über. In diesem Fall erfolgt der Werkstoffübergang in groben Tropfen.

Bei einer weiteren Erhöhung des Stromes über die kritische Stromstärke hinaus ergeben sich eine Erhöhung der Tropfenfrequenz und gleichzeitig eine deutliche Abnahme der Tropfengrößen.

Durch eine weitere Erhöhung des Schweißstromes erreicht man den Bereich des sogenannten Sprühlichtbogens, welcher durch einen völlig kurzschlussfreien und feintröpfigen Werkstoffübergang gekennzeichnet ist. Mit dem Sprühlichtbogen stellt sich im Strom- und Spannungsverlauf ein zeitlich sehr gleichmäßiger Schweißprozess ein. Für die Tropfenablösung im Sprühlichtbogen ist in erster Linie der sogenannte Pincheffekt verantwortlich, bei dem eine Einschnürung des Tropfens in Folge der Lorenzkraft erfolgt. Im Bereich des Sprühlichtbogens erfolgt also während der gesamten Zeit stets ein feintröpfiger Werkstoffübergang. Die Notwendigkeit, mit einer Stromstärke oberhalb der kritischen Stromstärke zu arbeiten, sorgt jedoch dafür, dass das Schweißen im Bereich des Sprühlichtbogens nicht für jede Schweißaufgabe geeignet ist. Insbesondere kann das Schweißen im Bereich des Sprühlichtbogens ungeeignet sein, wenn vergleichsweise dünne Werkstückabschnitte zusammengefügt werden sollen. Ebenso können Schwierigkeiten beim Schweißen in Zwangslagen auftreten.

Aus diesen Gründen existiert ein weiterer Schweißprozess, der als Pulsschweißprozess oder kurz als Pulsschweißen bezeichnet wird. Beim Pulsschweißen folgt auf eine Pulsstromphase, in der die kritische Stromstärke überschritten wird und die zum Einleiten des Ablösens eines Werkstofftropfens dient, eine Grundstromphase, die gegenüber der Pulsstromphase durch verringerte Lichtbogenstromstärke gekennzeichnet ist. Die in der Grundstromphase herrschende Grundstromstärke dient in erster Linie der Aufrechterhaltung des Lichtbogens. In der Regel beinhaltet ein Pulsschweißprozess eine Vielzahl von Pulstromphasen und Grundstromphasen, wobei sich Pulsstromphasen und die Grundstromphasen abwechseln. Das Pulsschweißen ermöglicht, in der Pulsstromphase einen Werkstoffübergang wie beim Sprühlichtbogenschweißen zu erhalten, und gleichzeitig die mittlere Lichtbogenstromstärke, d.h. die über eine volle Pulsstromphase und eine volle Grundstromphase gemittelte Lichtbogenstromstärke, gegenüber dem Sprühlichtbogenschweißen zu reduzieren.

Eine Erläuterung des Pulsschweißprozesses und seiner Parametrierung findet sich beispielsweise auf den Seiten 120-125 des Buches "Advanced welding processes - Technologies and process control" von John Norrish (Woodhead Publishing Materials, 2006), nachfolgend stets nur als "Norrish" bezeichnet.

Üblicherweise (s. Norrish), wird beim Pulsschweißen eine Pulsstromphase mit einem Lichtbogenstrom von ca. 400 A verwendet. Diese hohe Lichtbogenstromstärke wird dann für eine Pulsdauer von ca. 1,5 ms bis 4 ms aufrechterhalten. Die konkrete Parametrierung erfolgt dabei abhängig von den jeweiligen Umständen. Nach Norrish gilt für die Ablösung eines Werkstofftropfens von der abschmelzenden Elektrode pro Pulsstromphase folgender Zusammenhang zwischen der Lichtbogenstromstärke $I_P$ während der Pulsstromphase, der Pulsdauer $t_P$, der Drahtdicke T und der Abschmelzkonstante C:

$$I_P^n \cdot t_P \cdot T = C \qquad\qquad (1)$$

Dabei ist er Exponenten n einheitenlos und wird aus dem Bereich zwischen 1,1 und 2 gewählt. Ip liegt in der Praxis erheblich über der kritischen Stromstärke. Die Grundstromstärke hat eine vergleichsweise geringe Bedeutung für die Tropfenablösung und ist daher in der obigen Formel vernachlässigt worden. Da die Tropfenablösung durch die Pulsamplitude und die Pulsdauer bestimmt wird, kann der Strom im zeitlichen Mittel über Pulsstromphase und Grundstromphase auf deutlich unterhalb der kritischen Stromstärke abgesenkt werden, einfach indem die Dauer der Grundstromphase erhöht oder die Pulsfrequenz herabgesetzt wird.

Beim Pulsschweißen- und auch bei jedem anderen Lichtbogenschweißprozess mit abschmelzender Elektrode unter Schutzgas - entstehen Metalldämpfe, die durch das Verdampfen des Materials der abschmelzenden Elektrode und/oder des bearbeiteten Werkstücks erzeugt werden. Diese Metalldämpfe sind umweltschädlich und gesundheitsschädlich.

Es ist eine Aufgabe der vorliegenden Erfindung, eine Einheit und ein Verfahren zur Verfügung zu stellen, die das Pulsschweißen unter Schutzgas bei reduzierter Umwelt- und Gesundheitsbelastung ermöglichen.

Erfindungsgemäß wird diese Aufgabe bei einer Lichtbogenprozesssteuereinheit gemäß Anspruch 1 gelöst.

Erfindungsgemäß wird diese Aufgabe bei einem Verfahren gemäß Anspruch 8 gelöst.

Beim Lichtbogenschweißen mit abschmelzender Elektrode unter Schutzgas ionisiert die zwischen abschmelzender Elektrode und Werkstück anliegende elektrische Spannung die zwischen Elektrode und Werkstück vorhandenen Gase. Es entsteht also Plasma und es werden Ladungsträger freigesetzt, so dass das Gas leitfähig wird und ein Lichtbogen entstehen kann. Gleichzeitig kommt es zur Strahlungsemission durch das Gas. Die Erfassung dieser Strahlung, zum Beispiel mittels Photodioden, und die anschließende spektrale Analyse können Aufschluss über das Emissionsverhalten der verschiedenen vorhandenen Gase gegeben. Neben dem Gas oder den Gasen, die als Schutzgas eingesetzt werden, können auch erst während des Schweißvorgangs entstehende Metalldämpfe Emissionen verursachen (Metalldampfemissionen). Die Zuordnung der Emissionen zu den unterschiedlichen Gasen über die spektrale Analyse ermöglicht Rückschlüsse auf die jeweiligen Mengen der Gase.

Es konnte festgestellt werden, dass generell die vom ionisierten Schutzgas ausgehenden Emissionen (Schutzgasemissionen) und die Metalldampfemissionen mit steigender Lichtbogenstromstärke zunehmen. Allerdings hat sich gezeigt, dass in der Regel die Schutzgasemissionen mit sehr geringem zeitlichen Verzug dem Anstieg der Lichtbogenstromstärke folgen. Dagegen ist die Verzögerung beim Anstieg der Metalldampfemissionen größer.

Erfindungsgemäß beträgt die Dynamik des Anstiegs der Lichtbogenstromstärke ausgehend von der Grundstromstärke hin zur Maximalstromstärke mindestens 900 A/ms. Insbesondere kann die Dynamik mindestens 950 A/ms, speziell mindestens 1000 A/ms oder gar mindestens 1050 A/ms betragen. Alternative Begriffe für "Dynamik" sind in diesem Zusammenhang unter anderem "Steigung", "Steilheit" und "Anstiegsrate". Die Dynamik von mindestens 900 A/ms ermöglicht es, ausgehend von der Grundstromstärke in kurzer Zeit die Maximalstromstärke zu erreichen.

Die Maximalstromstärke von mindestens 500 A liegt erheblich oberhalb der nach dem Stand der Technik eingesetzten Stromstärke in der Pulsstromphase. Insbesondere kann die Maximalstromstärke über 550 A, über 600 A und insbesondere im Bereich von 600 A bis 650 A liegen. Angesichts der vergleichsweise hohen Maximalstromstärke kann auch bei relativ kurzem Aufrechterhalten der Maximalstromstärke ein ausreichender Energieeintrag erzielt werden. Erfindungsgemäß wird während der Pulsstromphase die Maximalstromstärke maximal für 0,5 ms aufrecht erhalten. Insbesondere kann die Maximalstromstärke für maximal 0,4 ms, speziell für maximal 0,3 ms aufrecht erhalten werden.

Aufgrund der hohen Dynamik, des kurzen Aufrechterhaltens der Maximalstromstärke und der beschriebenen Trägheit mit der die Metalldampfemissionen - und letztlich die Entstehung des Metalldampfes selbst - dem Anstieg der Lichtbogenstromstärke folgen, wird erfindungsgemäß vorwiegend in einem Bereich gearbeitet, in dem eine vergleichsweise geringe Menge an Metalldampf entsteht. Somit kann gegenüber herkömmlichen Pulsschweißverfahren die Entstehung gesundheitsschädlichen und auch umweltschädlichen Metalldampfs vermindert werden. Neben diesen Umwelt- und Gesundheitsvorteilen kann die Erfindung auch Vorteile bei der Schweißqualität und den Freiheitsgraden bei der Gestaltung des Schweißprozesses mit sich bringen.

Die erfindungsgemäße Erhöhung der Maximalstromstärke auf mindestens 500 A kann gegenüber der Parametrierung gemäß dem Stand der Technik bewirken, dass der Ansatz des Lichtbogens an der abschmelzenden Elektrode weiter nach oben, d.h. vom freien Ende der abschmelzenden Elektrode weg, verlagert wird. Zudem kann sich in eine vergrößerte Differenz zwischen Maximalstromstärke und Grundstromstärke ergeben. Aus der Verlagerung des Lichtbogenansatzes und der vergrößerten Stromstärkendifferenz kann eine besonders gleichmäßige Tropfenablösung resultieren. Angesichts der vergleichsweise hohen Maximalstromstärke kann auch bei relativ langer Dauer der Grundstromphase ein ausreichender Energieeintrag erzielt werden. Es können sich zusätzliche Freiheitsgrade bei der Gestaltung des Pulsschweißprozesses ergeben, weil eine besonders niedrige Frequenz der Tropenablösung möglich wird, so dass sich der Anwendungsbereich des Pulsschweißens vergrößern kann.

Die Dynamik von mindestens 900 A/ms ermöglicht es, ausgehend von der Grundstromstärke in kurzer Zeit die erfindungsgemäß hohe Maximalstromstärke und damit den Effekt der Verlagerung des Lichtbogenansatzes weg vom freien Ende der abschmelzenden Elektrode zu erreichen. Ferner trägt die hohe Dynamik und das damit verbundene schnelle Erreichen der Maximalstromstärke dazu bei, dass die Pulsstromphase insgesamt kurz sein kann, so dass auch die mittlere Lichtbogenstromstärke klein gehalten werden kann. Insbesondere kann der der Anstieg von der Grundstromstärke zur Maximalstromstärke weniger als 0,7 ms dauern. Er kann sogar unter 0,6 ms dauern. Insbesondere kann die Dauer zwischen 0,3 ms und 0,5 ms liegen.

Aufgrund des Umstands, dass während der Pulsstromphase die Maximalstromstärke maximal für 0,5 ms aufrecht erhalten wird, kann erreicht werden, dass die Ablösung des Werkstofftropfens vornehmlich in der Stromabfallphase erfolgt. Insbesondere kann die Maximalstromstärke für maximal 0,4 ms, speziell für maximal 0,3 ms aufrecht erhalten werden.

Die Kombination der Dynamik von mindestens 900 A/ms beim Anstieg der Lichtbogenstromstärke ausgehend von der Grundstromstärke hin zur Maximalstromstärke und des Aufrechterhaltens der Maximalstromstärke während der Pulsstromphase für maximal 0,5 ms erlaubt, trotz der hohen Maximalstromstärke die mittlere Stromstärke gering zu halten. Somit kann der Anwendungsbereich des Pulsschweißprozesses vergrößert werden. Die erfindungsgemäße Lichtbogenprozesssteuereinheit und das erfindungsgemäße Verfahren können auch dann eingesetzt werden, wenn besonders hohe Qualitätsanforderungen gestellt werden und das Sprühlichtbogenschweißen nicht in Frage kommt.

Die Lichtbogenprozesssteuereinheit unterliegt keinerlei Beschränkungen bezüglich der Komponenten, aus denen sie besteht. So kann sie beispielsweise einen Mikro-Prozessor umfassen, der die nötigen Steueroperationen vornimmt und dazu auf einen Speicher, beispielsweise einen Flash-Speicher, zurückgreift, in dem die genaue Art und Reihenfolge der auszuführenden Steueroperationen hinterlegt ist. Alternativ sind der Einsatz einer anwendungsspezifischen integrierten Schaltung (application specific integrated circuit - ASIC), eines Field Programmable Gate Array (FPGA) oder beliebige andere Lösungen denkbar. Des Weiteren sei erwähnt, dass die Lichtbogenprozesssteuereinheit auch mit der Fähigkeit zu Regelung des Lichtbogenstroms ausgestattet sein kann. Zu diesem Zweck kann sie Messmittel zur Erfassung von Schweißparametern beinhalten, so dass das Überwachen des Prozesses möglich wird. Wenn hier vom Steuern des Lichtbogenstroms die Rede ist, ist stets auch die Regelung des Lichtbogenstroms von diesem Begriff umfasst. Eine erfindungsgemäße Lichtbogenprozesssteuereinheit kann gegebenenfalls die Lichtbogenstromstärke auch nur indirekt steuern, in dem sie unmittelbar zunächst eine mit der Lichtbogenstromstärke in Zusammenhang stehende Größe steuert. Beispielsweise kann diese mit der Lichtbogenstromstärke in Zusammenhang stehende Größe die Spannung sein, die zwischen abschmelzender Elektrode und dem zu bearbeitenden Werkstück anliegt. Gleichermaßen kommt als nur ein weiteres Beispiel auch die Steuerung der über dem Lichtbogen abfallenden Leistung in Frage.

Da es erfindungsgemäß ausreicht, wenn in der Pulsstromphase die Lichtbogenstromstärke zeitweise oberhalb der kritischen Stromstärke liegt, wird die Zeit, während der der Anstieg ausgehend von der Grundstromstärke hin zur Maximalstromstärke erfolgt, im Kontext der vorliegenden Erfindung als Teil der Pulsstromphase betrachtet. Ebenso wird die Zeit, in der die Lichtbogenstromstärke ausgehend von der Maximalstromstärke auf die Grundstromstärke abfällt, als Teil der Pulsstromphase betrachtet. Dementsprechend ist die Grundstromphase dadurch gekennzeichnet, dass während ihr die Grundstromstärke herrscht.

Dass in der Grundstromphase die Grundstromstärke herrscht, bedeutet nicht, dass durchgängig exakt die gleiche Lichtbogenstromstärke gegeben sein muss. Vielmehr reicht es aus, wenn die Grundstromstärke im Rahmen der üblichen Genauigkeit eingehalten wird. Abweichungen von der angestrebten Grundstromstärke können sich etwa durch begrenzte Genauigkeit und die Trägheit der Steuerung bzw. Regelung der Lichtbogenstromstärke ergeben. Ebenso können Schwankungen im elektrischen Netz Abweichungen hervorrufen oder verstärken. Analog zu dem vorstehend bezüglich der Grundstromstärke Ausgeführten gilt auch für die Maximalstromstärke, dass wenn diese für einen bestimmten Zeitraum aufrechterhalten wird, dies im Rahmen der üblichen Schwankungen der Lichtbogenstromstärke geschieht.

Der Anstieg der Lichtbogenstromstärke ausgehend von der Grundstromstärke hin zur Maximalstromstärke mit einer Dynamik von mindestens 900 A/ms kann teilweise oder vollständig linear erfolgen. Er kann ebenso teilweise oder vollständig nichtlinear erfolgen. In diesem Fall bezieht sich die Dynamik von mindestens 900 A/ms auf den gesamten Zeitraum beginnend mit dem Zeitpunkt, zu dem die Erhöhung der Lichtbogenstromstärke beginnt, und endend mit dem Zeitpunkt, zu dem die Maximalstromstärke erstmalig erreicht wird.

Gemäß einem Ausführungsbeispiel ist bei einer erfindungsgemäßen Lichtbogenprozesssteuereinheit vorgesehen, dass die Lichtbogenprozesssteuereinheit eingerichtet ist, die Lichtbogenstromstärke derart zu steuern, dass die Pulsstromphase maximal 1 ms dauert.

Entsprechend ist gemäß einem Ausführungsbeispiel eines erfindungsgemäßen Verfahrens vorgesehen, dass die Lichtbogenstromstärke derart gesteuert wird, dass die Pulsstromphase maximal 1 ms dauert.

Eine maximale Dauer der Pulsstromphase von 1 ms kann insbesondere bedeuten, dass die Lichtbogenstromstärke innerhalb einer Zeitspanne von maximal 1 ms ausgehend von der Grundstromstärke die Maximalstromstärke erreicht und anschließend wieder die Grundstromstärke annimmt. Aufgrund der Merkmale der Erfindung, dass die Maximalstromstärke bei mindestens 500 A liegt und der Anstieg der Lichtbogenstromstärke ausgehend von der Grundstromstärke hin zur Maximalstromstärke mit einer Dynamik von mindestens 900 A/ms erfolgt, kann im Vergleich zum Stand der Technik der abschmelzenden Elektrode sehr schnell die für das Einleiten der Tropfenablösung notwendige Energie zugeführt werden, obwohl die Maximalstromstärke maximal für 0,5 ms aufrecht erhalten wird. Wegen des zügigen Einleitens der Tropfenablösung kann abschließend ein rasches Absenken der Lichtbogenstromstärke erfolgen. Es ergibt sich die Möglichkeit, den Verlauf der Lichtbogenstromstärke weitgehend frei zu gestalten, und die Dauer der Pulsstromphase, d.h. die Zeit von Beginn des Stromaustiegs bis zum Beginn des Stromabfalls auf 1 ms zu begrenzen.

Gemäß einem Ausführungsbeispiel ist bei einer erfindungsgemäßen Lichtbogenprozesssteuereinheit vorgesehen, dass die Lichtbogenprozesssteuereinheit eingerichtet ist, die Lichtbogenstromstärke dahingehend zu steuern, dass ein am Ende der Pulsstromphase erfolgender Abfall der Lichtbogenstromstärke ausgehend von der Maximalstromstärke hin zur Grundstromstärke mit einer Dynamik von mindestens 200 A/ms erfolgt.

Entsprechend ist gemäß einem Ausführungsbeispiel eines erfindungsgemäßen Verfahrens vorgesehen, dass die Lichtbogenstromstärke dahingehend gesteuert wird, dass ein am Ende der Pulsstromphase erfolgender Abfall der Lichtbogenstromstärke ausgehend von der Maximalstromstärke hin zur Grundstromstärke mit einer Dynamik von mindestens 200 A/ms erfolgt.

Die hohe Dynamik von mindestens 200 A/ms ermöglicht es, die Lichtbogenstromstärke binnen kürzester Zeit erheblich zu reduzieren. Einerseits kann so sichergestellt werden, dass ein niedriges Niveau der Lichtbogenstromstärke erreicht wird, bevor eine maximale Metalldampfentwicklung erreicht wird. Andererseits können sich zusätzliche Freiheitsgrade bei der Gestaltung des zeitlichen Verlaufs der Lichtbogenstromstärke ergeben. Trotz der hohen Maximalstromstärke kann aufgrund der Möglichkeit zur schnellen Reduktion der Lichtbogenstromstärke verhindert werden, dass die mittlere Lichtbogenstromstärke zu hoch wird. So kann ein breiter Anwendungsbereich des erfindungsgemäßen Pulsschweißvorgangs bei konstant hoher Schweißqualität erhalten werden.

Gemäß einem Ausführungsbeispiel ist bei einer erfindungsgemäßen Lichtbogenprozesssteuereinheit vorgesehen, dass die Lichtbogenprozesssteuereinheit eingerichtet ist, die Lichtbogenstromstärke dahingehend zu steuern, dass bei einem am Ende der Pulsstromphase erfolgenden Abfall der Lichtbogenstromstärke ausgehend von der Maximalstromstärke hin zur Grundstromstärke für eine definierte Zeitspanne eine Zwischenstromstärke, die betraglich zwischen der Grundstromstärke und der Maximalstromstärke liegt, aufrechterhalten wird.

Gemäß einem Ausführungsbeispiel ist bei einer erfindungsgemäßen Lichtbogenprozesssteuereinheit vorgesehen, dass die definierte Zeitspanne, für die die Zwischenstromstärke aufrechterhalten wird, zwischen und 0,2 ms und 0,5 ms beträgt.

Gemäß der Erfindung ist in der Lichtbogenprozesssteuereinheit ein Kurzschlussdetektionsmittel zugeordnet und die Lichtbogenprozesssteuereinheit ist eingerichtet, abhängig von einem detektierten Kurschluss ausgehend von der Grundstromphase die Pulsstromphase einzuleiten.

Entsprechend ist gemäß der Erfindung, für das Verfahren vorgesehen, dass eine Kurschlussdetektion durchgeführt wird und abhängig von einem detektierten Kurschluss ausgehend von der Grundstromphase die Pulsstromphase eingeleitet wird.

Das Kurzschlussdetektionsmittel kann beispielsweise ein Spannungsmessmittel umfassen. Alternativ kann die Kurzschlussdetektion auch mittels eines Strommessmittels erfolgen, in dem der Anstieg der Lichtbogenstromstärke im Kurzschlussfall detektiert und daraus das Vorliegen eines Kurzschlusses abgeleitet wird.

Gemäß einem Ausführungsbeispiel ist bei einer erfindungsgemäßen Lichtbogenprozesssteuereinheit vorgesehen, dass die Lichtbogenprozesssteuereinheit eingerichtet ist, ausgehend von der Grundstromphase die Pulsstromphase erst dann einzuleiten, wenn nach der Detektion des Kurzschlusses eine definierte Zeitspanne vergangen ist.

Entsprechend ist gemäß einem Ausführungsbeispiel eines erfindungsgemäßen Verfahrens vorgesehen, dass ausgehend von der Grundstromphase die Pulsstromphase erst dann eingeleitet wird, wenn nach der Detektion des Kurzschlusses eine definierte Zeitspanne vergangen ist.

Ein Ausführungsbeispiel beinhaltet, dass die die definierte Zeitspanne zwischen 0,1 ms und 2 ms beträgt.

Die Erfindung wird im Folgenden anhand von vier Figuren näher erläutert:

Dabei zeigen

Fig. 1   eine schematische Darstellung eines zeitlichen Verlaufs der Lichtbogenstromstärke bei einem Pulsschweißvorgang gemäß dem Stand der Technik, zusammen mir einer schematischen Darstellung der relativen Intensitäten der Strahlungsemissionen des Schutzgases und des beim Schweißvorgang entstehenden Metalldampfs;

Fig. 2   eine schematische Darstellung eines Ausführungsbeispiels eines erfindungsgemäßen Lichtbogenschweißgeräts, das eine erfindungsgemäße Lichtbogenprozesssteuereinheit umfasst, in Form eines Blockschaltbilds;

Fig. 3   eine schematische Darstellung eines zeitlichen Verlaufs der Lichtbogenstromstärke, wie er sich bei einem Ausführungsbeispiel eines erfindungsgemäßen Verfahrens bzw. aufgrund der Steuerung durch die Lichtbogenprozesssteuereinheit aus Fig. 2 ergeben kann;

Fig. 4   eine schematische Darstellung eines zweiten zeitlichen Verlaufs der Lichtbogenstromstärke bei einem erfindungsgemäßen Pulsschweißvorgang.

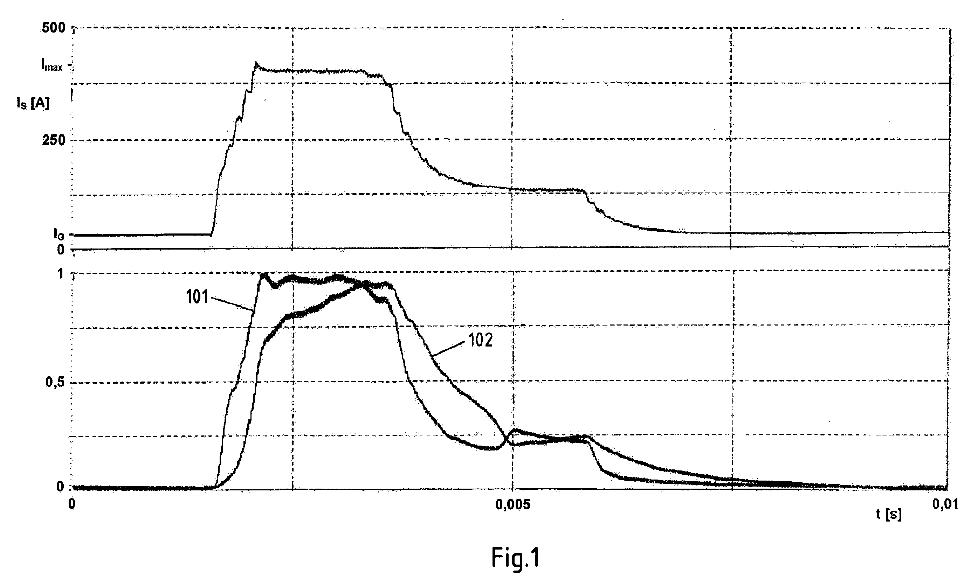

Fig. 1 zeigt eine schematische Darstellung eines zeitlichen Verlaufs der Lichtbogenstromstärke $I_s$ bei einem Pulsschweißvorgang gemäß dem Stand der Technik, zusammen mir einer schematischen Darstellung der relativen Intensitäten der Strahlungsemissionen des Schutzgases und des beim Schweißvorgang entstehenden Metalldampfs.

Die Strahlungsemissionen des Schutzgases hier. Argon und des beim Schweißvorgang - hier ein MIG-Aluminiumschweißprozess - entstehenden Metalldampfs wurden mittels einer Photodiode erfasst. Über eine anschließende spektrale Analyse wurde aufgeschlüsselt, welche Emissionen vom Argon und welche vom Metalldampf stammen. Im unteren Diagramm in Fig. 1 sind die relativen Intensität den Strahlungsemissionen von Argon und Metalldampf dargestellt. Kurve 101 zeigt die Strahlungsemission des Argons und Kurve 102 die Strahlungsemission des Metalldampfes. Die Zuordnung der Emissionen zu den unterschiedlichen Gasen über die spektrale Analyse ermöglicht Rückschlüsse auf die jeweiligen Mengen der Gase.

Wie der Vergleich des Verlaufs der Lichtbogenstromstärke $I_s$ im oberen Diagramm von Fig. 1 mit dem Verlauf der relativen Intensitäten der Strahlungsemissionen von Argon und Metalldampf im unteren Diagramm von Fig. 1 zeigt, nehmen generell die Argonemissionen und die Metalldampfemissionen mit steigender Lichtbogenstromstärke $I_s$ zu. Es ist jedoch zu erkennen, dass die Argonemissionen (Kurve 101) mit sehr geringem zeitlichen Verzug dem Anstieg der Lichtbogenstromstärke $I_s$ folgen, während die Verzögerung beim Anstieg der Metalldampfemissionen (Kurve 102) größer ist. Die Metalldampfemissionen erreichen dabei ein Maximum erst am Ende der Phase maximaler Lichtbogenstromstärke.

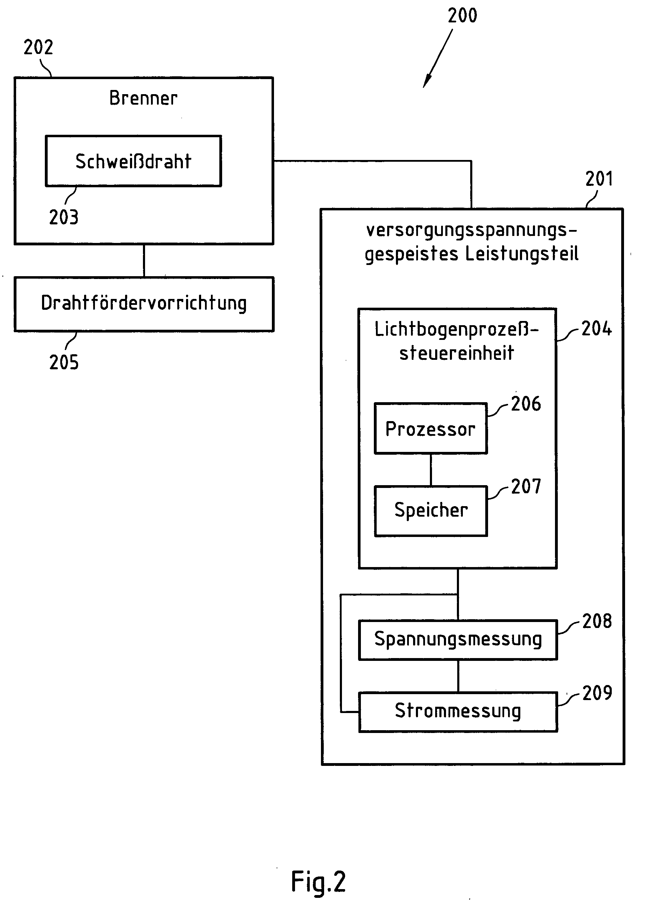

Fig. 2 zeigt eine schematische Darstellung eines Ausführungsbeispiels eines erfindungsgemäßen Lichtbogenschweißgeräts 200, das eine erfindungsgemäße Lichtbogenprozesssteuereinheit 204 umfasst, in Form eines Blockschaltbilds.

Das Lichtbogenschweißgerät 200 umfasst einen Brenner 202. Zum Schweißen unter Schutzgas ist der Brenner 202 mit einer abschmelzenden Elektrode in Form eines Schweißdrahts 203 ausgestattet. Für den automatischen Drahtvorschub ist eine Drahtfördervorrichtung 205 vorgesehen. Der Schweißdraht 203 ist mittels eines versorgungsspannungsgespeisten Leistungsteils 201 mit Energie beaufschlagbar. Dem versorgungsspannungsgespeisten Leistungsteil 201 ist eine erfindungsgemäße Lichtbogenprozesssteuereinheit 204 zugeordnet. Diese umfasst einen Prozessor 206 und einen Speicher 207. Der Prozessor 206 und der Speicher 207 stehen miteinander in Verbindung. Der Lichtbogenprozesssteuereinheit 204 ist ein Spannungsmesser 208 und Strommesser 209 zugeordnet.

Die abschmelzende Elektrode 203 ist hier ein Draht mit einem Durchmesser von 1,2 mm. Als Schutzgas kommt Argon zum Einsatz.

Die Lichtbogenprozesssteuereinheit 204 ist eingerichtet, die Lichtbogenstromstärke dahingehend zu steuern, dass ein Pulsschweißprozess durchgeführt wird, wobei der Pulsschweißprozess zumindest eine Pulsstromphase, in der die Lichtbogenstromstärke zumindest zeitweise oberhalb einer kritischen Stromstärke liegt, und eine Grundstromphase, in der die Lichtbogenstromstärke bei einer Grundstromstärke liegt, umfasst. Sie ist ferner eingerichtet, die Lichtbogenstromstärke derart zu steuern, dass während der Pulsstromphase eine Maximalstromstärke erreicht wird, wobei die Maximalstromstärke bei mindestens 500 A liegt und maximal für 0,5 ms aufrecht erhalten wird und wobei der Anstieg der Lichtbogenstromstärke ausgehend von der Grundstromstärke hin zur Maximalstromstärke mit einer Dynamik von mindestens 900 A/ms erfolgt.

Zudem ist die Lichtbogenprozesssteuereinheit 204 eingerichtet, die Lichtbogenstromstärke derart zu steuern, dass die Pulsstromphase maximal 1 ms dauert.

Die Lichtbogenprozesssteuereinheit 204 ist außerdem eingerichtet, die Lichtbogenstromstärke dahingehend zu steuern, dass ein am Ende der Pulsstromphase erfolgender Abfall der Lichtbogenstromstärke ausgehend von der Maximalstromstärke hin zur Grundstromstärke mit einer Dynamik von mindestens 200 A/ms erfolgt.

Ferner ist die Lichtbogenprozesssteuereinheit 204 gemäß der Erfindung eingerichtet, die Lichtbogenstromstärke dahingehend zu steuern, dass bei einem am Ende der Pulsstromphase erfolgenden Abfall der Lichtbogenstromstärke ausgehend von der Maximalstromstärke hin zur Grundstromstärke für eine definierte Zeitspanne von 0,3 ms ein Zwischenstromstärke, die betraglich zwischen der Grundstromstärke und der Maximalstromstärke liegt, aufrechterhalten wird.

Zudem ist die Lichtbogenprozesssteuereinheit 204 gemäß der Erfindung eingerichtet, abhängig von einem detektierten Kurschluss, der mittels des Spannungsmessers 208 erfasst wurde, ausgehend von der Grundstromphase die Pulsstromphase einzuleiten.

Zu Zweck der Steuerung des Lichtbogenstroms greift der Prozessor 206 auf ein im Speicher 207 hinterlegtes Steuerprogramm zurück. Dieses umfasst Instruktionen, die bewirken, dass die Lichtbogenprozesssteuereinheit 204 über den Prozessor 206 Steuersignale an das versorgungsspannungsgespeiste Leistungsteil 201 ausgibt, in Folge derer der erfindungsgemäße Stromverlauf herbeigeführt wird.

Wird das Lichtbogenschweißgerät 200 in Betrieb genommen und eine Schweißung durchgeführt, erfolgt die Steuerung der Lichtbogenstromstärke gemäß dem erfindungsgemäßen Verfahren.

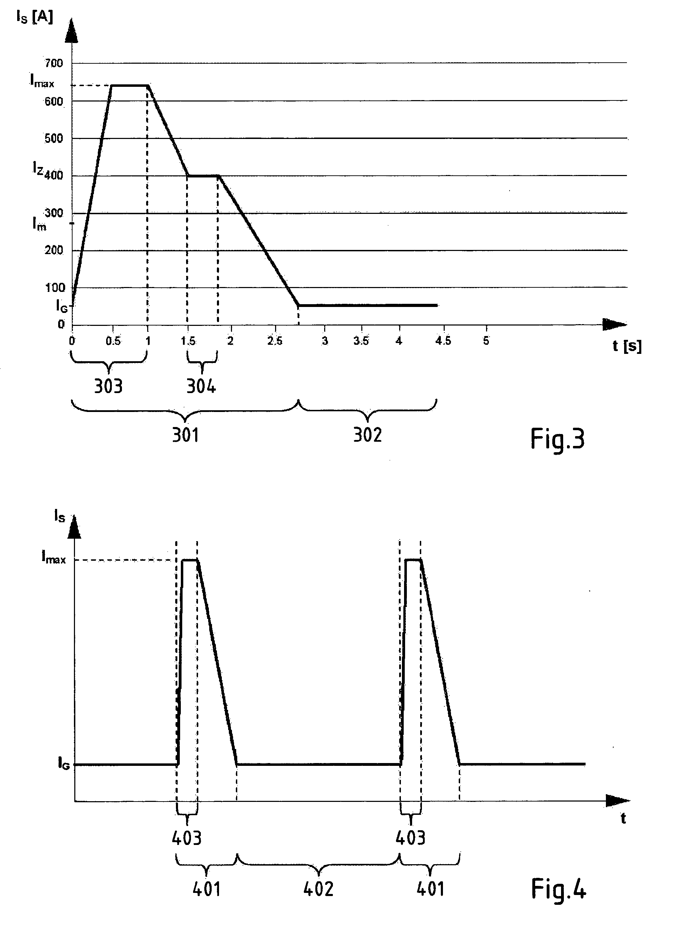

Fig. 3 zeigt eine schematische Darstellung eines zeitlichen Verlaufs der Lichtbogenstromstärke $I_s$, wie er sich bei einem Ausführungsbeispiel eines erfindungsgemäßen Verfahrens bzw. aufgrund der Steuerung durch die Lichtbogenprozesssteuereinheit 204 aus Fig. 2 ergeben kann.

Der in Fig. 3 gezeigte Verlauf der Lichtbogenstromstärke gliedert sich in die Pulsstromphase 303 und die Grundstromphase 302. In der Grundstromphase 302 liegt die Lichtbogenstromstärke bei einer Grundstromstärke $I_G$, die in diesem Beispiel ca. 50 A beträgt. Während der Pulsstromphase 303 wird ein Maximalstromstärke $I_{max}$ erreicht. Diese liegt bei ca. 650 A. Die ca. Maximalstromstärke $I_{max}$ wird für ca. 0,4 ms aufrechterhalten. Wie Fig. 2 zu entnehmen ist, erfolgt der Anstieg der Lichtbogenstromstärke $I_s$ ausgehend von der Grundstromstärke $I_G$ hin zur Maximalstromstärke $I_{max}$ linear in ca. 0,6 ms. Die Dynamik des Anstiegs der Lichtbogenstromstärke liegt damit bei ca. 1000 A/ms. Am Ende der Pulsstromphase 303 fällt die Lichtbogenstromstärke $I_s$ ausgehend von der Maximalstromstärke $I_{max}$ hin zur Grundstromstärke $I_G$ ab. Dabei wird für eine definierte Zeitspanne 304 von 0,3 ms ein Zwischenstromstärke $I_z$ aufrechterhalten, die gemäß Fig. 3 bei 400 A liegt. Nach Ende der definierten Zeitspanne 304 fällt die Lichtbogenstromstärke $I_s$ auf die Grundstromstärke $I_G$ ab. Im dem hier diskutierten beispielhaften Verlauf der Lichtbogenstromstärke $I_s$ wird gerechnet von dem Zeitpunkt, zu dem das Absinken der Lichtbogenstromstärke $I_s$ einsetzt (t ≈ 1 ms), bis zu dem Zeitpunkt, zu dem erneut die Grundstromstärke $I_G$ erreicht wird (t ≈ 2,8 ms), die Stromstärkendifferenz von ca. 600 A in ca. 1,8 ms durchlaufen. Der Abfall der Lichtbogenstromstärke $I_s$ ausgehend von der Maximalstromstärke $I_{max}$ hin zur Grundstromstärke $I_G$ erfolgt also mit einer Dynamik von ca. 333 A/ms (bei betragsmäßiger Betrachtung; ansonsten wäre die Dynamik negativ). Insgesamt dauert die Gesamtstromphasen 301 ca. 2,8 ms.

Wie bereits erwähnt beträgt die Dynamik des Anstiegs der Lichtbogenstromstärke $I_s$ ausgehend von der Grundstromstärke $I_G$ hin zur Maximalstromstärke $I_{max}$ ca. 1000 A/ms. Dies ermöglicht, ausgehend von der Grundstromstärke $I_G$ in kurzer Zeit (hier ca. 0,6 ms) die Maximalstromstärke $I_{max}$ von ca. 650 A zu erreichen.

Die Maximalstromstärke von ca. 650 A liegt erheblich oberhalb der nach dem Stand der Technik eingesetzten Stromstärke in der Pulsstromphase. Angesichts der vergleichsweise hohen Maximalstromstärke $I_{max}$ kann auch bei relativ kurzem Aufrechterhalten (hier ca. 0,4 ms) der Maximalstromstärke $I_{max}$ ein ausreichender Energieeintrag erzielt werden.

Aufgrund der hohen Dynamik von ca. 1000 A/ms, des kurzen Aufrechterhaltens der Maximalstromstärke $I_{max}$ von ca. 650 A für nur ca. 0,4 ms und der anhand von Fig. 1 beschriebenen Trägheit mit der die Metalldampfemissionen - und letztlich die Entstehung des Metalldampfes selbst - dem Anstieg der Lichtbogenstromstärke $I_s$ folgen, wird erfindungsgemäß vorwiegend in einem Bereich gearbeitet, in dem eine vergleichsweise geringe Menge an Metalldampf entsteht. Somit kann gegenüber herkömmlichen Pulsschweißverfahren die Entstehung gesundheitsschädlichen und auch umweltschädlichen Metalldampfs vermindert werden.

Neben diesen Umwelt- und Gesundheitsvorteilen bewirkt dieses Ausführungsbeispiel auch Vorteile bei der Schweißqualität und ermöglicht zusätzliche Freiheitsgraden bei der Gestaltung des Schweißprozesses.

Die Maximalstromstärke $I_{max}$ von ca. 650 A liegt erheblich oberhalb der nach dem Stand der Technik eingesetzten Stromstärke in der Pulsstromphase. Dies bewirkt gegenüber der Parametrierung gemäß dem Stand der Technik, dass der Ansatz des Lichtbogens am Schweißdraht 203 weiter nach oben, d.h. vom freien Ende des Schweißdrahts 203 weg, verlagert wird. Die Stromstärkendifferenz von ca. 600 A zwischen Maximalstromstärke $I_{max}$ und Grundstromstärke $I_G$ ist ebenfalls größer als beim Stand der Technik. Aus der Verlagerung des Lichtbogenansatzes und der vergrößerten Stromstärkendifferenz resultiert eine besonders gleichmäßige Tropfenablösung. Angesichts der vergleichsweise hohen Maximalstromstärke $I_{max}$ kann auch bei relativ langer Dauer der Grundstromphase 302 ein ausreichender Energieeintrag erzielt werden. Es ergeben sich zusätzliche Freiheitsgrade bei der Gestaltung des Pulsschweißprozesses, weil eine besonders niedrige Frequenz der Tropfenablösung möglich wird, so dass sich der Anwendungsbereich des Pulsschweißens vergrößern kann.

Wie bereits erwähnt beträgt die Dynamik des Anstiegs der Lichtbogenstromstärke $I_s$ ausgehend von der Grundstromstärke $I_G$ hin zur Maximalstromstärke $I_{max}$ ca. 1000 A/ms. Dies ermöglicht, ausgehend von der Grundstromstärke $I_G$ in kurzer Zeit die hohe Maximalstromstärke $I_{max}$ von ca. 650 A und damit den angestrebten Effekt der Verlagerung des Lichtbogenansatzes weg vom freien Ende des Schweißdrahts 203 zu erreichen. Das schnelle Erreichen der Maximalstromstärke $I_{max}$ trägt dazu bei, dass die Pulsstromphase 303 mit ca. 1 ms vergleichsweise kurz sein kann, so dass auch die mittlere Lichtbogenstromstärke Im klein gehalten werden kann. In Fig. 3 liegt $I_m$ bei ca. 280 A.

Aufgrund des Umstands, dass während der Pulsstromphase 303 die Maximalstromstärke $I_{max}$ für nur ca. 0,4 ms aufrecht erhalten wird, kann erreicht werden, dass die Ablösung des Werkstofftropfens vornehmlich in der Stromabfallphase (d.h. in der Phase 1 ms ≤ t ≥ 2,8 ms) erfolgt.

Die Kombination der Dynamik von ca. 1000 A/ms beim Anstieg der Lichtbogenstromstärke $I_s$ und des Aufrechterhaltens der Maximalstromstärke $I_{max}$ während der Pulsstromphase 303 für nur ca. 0,4 ms erlaubt, trotz der hohen Maximalstromstärke $I_{max}$ die mittlere Stromstärke $I_m$ gering zu halten. Somit kann der Anwendungsbereich des Pulsschweißprozesses vergrößert werden. Die erfindungsgemäße Lichtbogenprozesssteuereinheit 204 und das erfindungsgemäße Verfahren können auch dann eingesetzt werden, wenn besonders hohe Qualitätsanforderungen gestellt werden und das Sprühlichtbogenschweißen nicht in Frage kommt.

Wegen der hohen Maximalstromstärke $I_{max}$ von ca. 650 A und der Dynamik von ca. 1000 A/ms kann im Vergleich zum Stand der Technik dem Schweißdraht 203 sehr schnell die für das Einleiten der Tropfenablösung notwendige Energie zugeführt werden, obwohl die Maximalstromstärke $I_{max}$ für nur ca. 0,4 ms aufrecht erhalten wird. Wegen des zügigen Einleitens der Tropfenablösung kann abschließend ein rasches Absenken der Lichtbogenstromstärke $I_s$ erfolgen. Die hohe Dynamik von ca. 333 A/ms beim Abfall der Lichtbogenstromstärke $I_s$ ausgehend von der Maximalstromstärke $I_{max}$ hin zur Grundstromstärke ermöglicht es, die Lichtbogenstromstärke $I_s$ binnen kürzester Zeit erheblich zu reduzieren. Einerseits kann so sichergestellt werden, dass eine niedriges Niveau der Lichtbogenstromstärke $I_s$ erreicht wird, bevor eine maximale Metalldampfentwicklung erreicht wird. Andererseits können sich zusätzliche Freiheitsgrade bei der Gestaltung des zeitlichen Verlaufs der Lichtbogenstromstärke $I_s$ ergeben. Trotz der hohen Maximalstromstärke $I_{max}$ kann aufgrund der Möglichkeit zur schnellen Reduktion der Lichtbogenstromstärke $I_s$ verhindert werden, dass die mittlere Lichtbogenstromstärke $I_m$ zu hoch wird. Es ergibt sich die Möglichkeit, bei konstant hoher Schweißqualität den Verlauf der Lichtbogenstromstärke $I_s$ weitgehend frei zu gestalten, und die Dauer der Gesamtstromphase 301 auszudehnen, so dass in dem hier diskutierten Beispiel eine Dauer der Gesamtstromphase 301 von ca. 2,8 ms erreicht wird.

Fig. 4 zeigt eine schematische Darstellung der Form eines zweiten zeitlichen Verlaufs der Lichtbogenstromstärke $I_s$ bei einem erfindungsgemäßen Pulsschweißvorgang. Die Gesamtstromphase ist mit dem Bezugszeichen 401 und die Grundstromphase mit dem Bezugszeichen 402 versehen, die Pulsstromphase mit dem Bezugszeichen 403. in der Pulsstromphase 403 steigt die Lichtbogenstromstärke $I_s$ ausgehend von der Grundstromstärke $I_G$ hin zur Maximalstromstärke $I_{max}$ linear. Wie in Fig. 4 gezeigt, setzt sofort nachdem die Maximalstromstärke $I_{max}$ erreicht wurde der Abfall der Lichtbogenstromstärke $I_s$ ausgehend von der Maximalstromstärke $I_{max}$ hin zur Grundstromstärke $I_G$ ein, so dass während der Pulsstromphase 403 die Maximalstromstärke $I_{max}$ für deutlich weniger als die maximal zulässigen 0,5 ms aufrechterhalten wird. Der Abfall der Lichtbogenstromstärke $I_s$ erfolgt ebenfalls linear. Es wird also im Gegensatz zu dem Verlauf der Lichtbogenstromstärke $I_s$ in Fig. 3 nicht für eine definierte Zeitspanne eine Zwischenstromstärke aufrechterhalten. Somit zeigt der Verlauf der Lichtbogenstromstärke $I_s$ kein Stromplateau beim Abfall der Lichtbogenstromstärke $I_s$ am Ende der Gesamtstromphase 401.

## Patentansprüche

**1.** Lichtbogenprozesssteuereinheit (204) für ein Lichtbogenschweißgerät (200) mit einer abschmelzenden Elektrode (203) zum Schweißen unter Schutzgas, wobei die Lichtbogenprozesssteuereinheit (204) eingerichtet ist,

- die Lichtbogenstromstärke ($I_S$) dahingehend zu steuern, dass ein Pulsschweißprozess durchgeführt wird, wobei der Pulsschweißprozess zumindest eine Pulsstromphase (303, 403), in der die Lichtbogenstromstärke ($I_S$) zumindest zeitweise oberhalb der kritischen Stromstärke liegt, und eine Grundstromphase (302, 402), in der die Lichtbogenstromstärke ($I_S$) bei einer Grundstromstärke ($I_G$) liegt, umfasst, wobei die Lichtbogenprozesssteuereinheit (204) eingerichtet ist, die Lichtbogenstromstärke ($I_S$) derart zu steuern, dass während der Pulsstromphase (303, 403) eine Maximalstromstärke ($I_{max}$) erreicht wird, wobei die Maximalstromstärke ($I_{max}$) bei mindestens 500 A liegt und maximal für 0,5 ms aufrecht erhalten wird und wobei der Anstieg der Lichtbogenstromstärke ($I_S$) ausgehend von der Grundstromstärke ($I_G$) hin zur Maximalstromstärke ($I_{max}$) mit einer Dynamik von mindestens 900 A/ms erfolgt, **dadurch gekennzeichnet, dass** der Lichtbogenprozesssteuereinheit (204) ein Kurzschlussdetektionsmittel (208) zur Detektion eines Kurzschlusses zwischen der abschmelzenden Elektrode (203) und dem zu bearbeitenden Werkstück zugeordnet ist und die Lichtbogenprozesssteuereinheit (204) eingerichtet ist, abhängig von einem detektierten Kurschluss ausgehend von der Grundstromphase (303, 403) die Pulsstromphase (301, 401) einzuleiten.

2. Lichtbogenprozesssteuereinheit (204) nach Anspruch 1, **dadurch gekennzeichnet, dass** die Lichtbogenprozesssteuereinheit (204) eingerichtet ist, ausgehend von der Grundstromphase (303, 403) die Pulsstromphase (301, 401) erst dann einzuleiten, wenn nach der Detektion des Kurzschlusses eine definierte Zeitspanne vergangen ist.

3. Lichtbogenprozesssteuereinheit (204) nach Anspruch 2, **dadurch gekennzeichnet, dass** die definierte Zeitspanne zwischen 0,1 ms und 2 ms beträgt.

4. Lichtbogenprozesssteuereinheit (204) nach Anspruch 1, **dadurch gekennzeichnet, dass** die Lichtbogenprozesssteuereinheit (204) eingerichtet ist, die Lichtbogenstromstärke ($I_S$) derart zu steuern, dass die Pulsstromphase (303, 403) maximal 1 ms dauert.

5. Lichtbogenprozesssteuereinheit (204) nach einem der vorhergehenden Ansprüche, **dadurch gekennzeichnet, dass** die Lichtbogenprozesssteuereinheit (204) eingerichtet ist, die Lichtbogenstromstärke ($I_S$) dahingehend zu steuern, dass ein am Ende der Pulsstromphase (303, 403) erfolgender Abfall der Lichtbogenstromstärke ($I_S$) ausgehend von der Maximalstromstärke ($I_{max}$) hin zur Grundstromstärke ($I_G$) mit einer Dynamik von mindestens 200 A/ms erfolgt.

6. Lichtbogenprozesssteuereinheit (204) nach einem der vorhergehenden Ansprüche, **dadurch gekennzeichnet, dass** die Lichtbogenprozesssteuereinheit (204) eingerichtet ist, die Lichtbogenstromstärke ($I_S$) dahingehend zu steuern, dass bei einem am Ende der Pulsstromphase (303) erfolgenden Abfall der Lichtbogenstromstärke ($I_S$) ausgehend von der Maximalstromstärke ($I_{max}$) hin zur Grundstromstärke ($I_G$) für eine definierte Zeitspanne (304) eine Zwischenstromstärke ($I_Z$), die betraglich zwischen der Grundstromstärke ($I_G$) und der Maximalstromstärke ($I_{max}$) liegt, aufrechterhalten wird.

7. Lichtbogenprozesssteuereinheit (204) nach Anspruch 6, **dadurch gekennzeichnet, dass** die definierte Zeitspanne (304), für die die Zwischenstromstärke ($I_Z$) aufrechterhalten wird, zwischen und 0,1 ms und 0,5 ms beträgt.

8. Verfahren zum Pulsschweißen unter Schutzgas mit einem Lichtbogenschweißgerät (200) mit einer abschmelzenden Elektrode (203), wobei der Pulsschweißprozess zumindest eine Pulsstromphase (303, 403), in der die Lichtbogenstromstärke ($I_S$) zumindest zeitweise oberhalb der kritischen Stromstärke liegt, und eine Grundstromphase (302, 402), in der die Lichtbogenstromstärke bei einer Grundstromstärke ($I_G$) liegt, umfasst, wobei die Lichtbogenstromstärke ($I_S$) derart gesteuert wird, dass während der Pulsstromphase (303, 403) eine Maximalstromstärke ($I_{max}$) erreicht wird, wobei die Maximalstromstärke ($I_{max}$) bei mindestens 500 A liegt und maximal für 0,5 ms aufrecht erhalten wird und wobei der Anstieg der Lichtbogenstromstärke ($I_S$) ausgehend von der Grundstromstärke ($I_G$) hin zur Maximalstromstärke ($I_{max}$) mit einer Dynamik von mindestens 900 A/ms erfolgt, **dadurch gekennzeichnet, dass** abhängig von einem detektierten Kurzschluss ausgehend von der Grundstromphase die Pulsstromphase eingeleitet wird.

## Claims

1. An electric arc process control unit (204) for an arc welding device (200) with an melting electrode (203) for welding under protective gas, wherein the electric arc process control unit (204) is adapted for controlling the arc current ($I_S$) to the effect that a pulse welding process is carried out, wherein the pulse welding process comprises at least one pulse current phase (303, 403) in which the arc current intensity ($I_S$) is at least temporarily above the critical current intensity, and a basic current phase (302, 402) in which the arc current intensity (Is) lies at a base current intensity ($I_G$), wherein the electric arc process control unit (204) is adapted for controlling the electric arc current intensity (Is) in such a manner that a maximum current intensity ($I_{max}$) is achieved during the pulse current phase (303, 403), wherein the maximum current intensity ($I_{max}$) is at least 500 A and is maintained for a maximum of 0.5 ms, and wherein the increase in arc welding current intensity ($I_S$), starting from the basic current intensity ($I_G$) towards the maximum current intensity ($I_{max}$), is carried out with a dynamic of at least 900 A/ms, **characterized in that** the electric arc process control unit (204) is associated with a short circuit detection unit (208) for detecting a short circuit between the melting electrode (203) and the workpiece to be processed, and the electric arc process control unit (204) is adapted to initiate the pulse current phase (301, 401) based on a detected short circuit starting from the base current phase (303, 403).

2. The electric arc process control unit (204) according to claim 1, **characterized in that** the electric arc process control unit (204) is adapted to initiate the pulse current phase (301, 401) starting from the base current phase (303, 304) only if a defined period of time has elapsed after the detection of the short circuit.

3. The electric arc process control unit (204) according to claim 2, **characterized in that** the defined period of time ranges between 0.1 ms and 2 ms.

4. The electric arc process control unit (204) according to claim 1, **characterized in that** the electric arc process control unit (204) is adapted to control the electric arc current intensity ($I_S$) in such a manner that the pulse current phase (303, 403) lasts for a maximum time of 1 ms.

5. The electric arc process control unit (204) according to any one of the preceding claims, **characterized in that** the electric arc process control unit (204) is adapted to control the electric arc current intensity ($I_S$) to the effect that a decrease in the electric arc current intensity (Is) occurring at the end of the pulse current phase (303, 403), starting from the maximum current intensity ($I_{max}$) towards the base current intensity ($I_G$), is carried out with a dynamic of at least 200 A/ms.

6. The electric arc process control unit (204) according to any one of the preceding claims, **characterized in that** the electric arc process control unit (204) is adapted to control the electric arc current intensity (Is) to the effect that in the case of a decrease in electric arc current intensity (Is) taking place at the end of the pulse current phase (303), starting from the maximum current intensity ($I_{max}$) towards the base current intensity ($I_G$), an intermediate current intensity ($I_Z$) is maintained for a defined time period (304), the amount of the intermediate current intensity ranging between the base current intensity ($I_G$) and the maximum current intensity ($I_{max}$).

7. The electric arc process control unit (204) according to claim 6, **characterized in that** the defined time period (304) for which the intermediate current intensity ($I_Z$) is maintained, ranges between 0.1 ms and 0.5 ms.

8. A method for pulse welding under a protective gas using an arc welding device (200) with a melting electrode (203), wherein the pulse welding process comprises at least one pulse current phase (303, 403) in which the arc current intensity (Is) is at least temporarily above the critical current intensity, and a basic current phase (302, 402) in which the arc current intensity lies at a base current intensity ($I_G$), wherein
the electric arc current intensity ($I_S$) is controlled in such a manner that a maximum current intensity ($I_{max}$) is achieved during the pulse current phase (303, 403), wherein the maximum current intensity ($I_{max}$) is at least 500 A and is maintained for a maximum of 0.5 ms, and wherein the increase in arc welding current intensity ($I_S$), starting from the basic current intensity ($I_G$) towards the maximum current intensity ($I_{max}$), is carried out with a dynamic of at least 900 A/ms, **characterized in that**
the pulse current phase is initiated based on a detected short circuit starting from the base current phase.

**Revendications**

1. Unité de commande de procédé de soudage à l'arc (204) pour un appareil de soudage à l'arc (200) avec une électrode (203) fusible pour souder sous gaz inerte pour lequel l'unité de commande de procédé de soudage à l'arc (204) est réglée
pour contrôler l'intensité de courant de soudage à l'arc ($I_S$) en ce sens qu'un procédé de soudage par impulsions est effectué, pour lequel le procédé de soudage par impulsions comprend au moins une phase de courant par impulsions (303, 403) dans laquelle l'intensité de courant de l'arc ($I_S$) se situe au moins temporairement au-dessus de l'intensité de courant critique et une phase de courant de base (302, 402) dans laquelle l'intensité de courant de l'arc ($I_S$) se situe à une intensité de courant de base ($I_G$) pour lequel
l'unité de commande de procédé de soudage à l'arc (204) est réglée pour commander l'intensité de courant de l'arc ($I_S$) de telle sorte que pendant la phase de courant de base (303, 403) une intensité de courant maximale ($I_{max}$) est atteinte, l'intensité de courant maximale ($I_{ma}x$) se situant au moins à 500 A et est maintenue au maximum pendant 0,5 ms et pour lequel l'augmentation de l'intensité de courant d'arc ($I_S$) partant de l'intensité de courant de base ($I_G$) jusqu'à l'intensité de courant maximale ($I_{max}$) a lieu avec une dynamique d'au moins 900 A/ms, **caractérisée en**

ce qu'à l'unité de commande de procédé de soudage à l'arc (204) est affecté un moyen de détection de court-circuit (208) pour détecter un court-circuit entre l'électrode fusible (203) et la pièce à usiner et l'unité de commande de procédé de soudage à l'arc (204) est réglée pour initier la phase de courant à impulsions (301, 401) en fonction d'un court-circuit détecté en partant de la phase de courant de base (303, 403).

2. Unité de commande de procédé de soudage à l'arc (204) selon la revendication 1 **caractérisée en ce que** l'unité de commande de procédé de soudage à l'arc (204) est réglée pour n'initier la phase de courant à impulsions (301, 401) en partant de la phase de courant de base (303, 403) que si une période de temps définie s'est écoulée après la détection du court-circuit.

3. Unité de commande de procédé de soudage à l'arc (204) selon la revendication 2 **caractérisée en ce que** la période de temps définie se situe entre 0, 1 ms et 2 ms.

4. Unité de commande de procédé de soudage à l'arc (204) selon la revendication 1 **caractérisée en ce que** l'unité de commande de procédé de soudage à l'arc (204) est réglée pour commander l'intensité de courant d'arc ($I_S$) de telle sorte que la phase de courant à impulsions (303, 403) dure au maximum 1 ms.

5. Unité de commande de procédé de soudage à l'arc (204) selon une quelconque des revendications précédentes **caractérisée en ce que** l'unité de commande de procédé de soudage à l'arc (204) est réglée pour commander l'intensité de courant d'arc ($I_S$) en ce sens qu'une chute de l'intensité de courant d'arc ($I_S$) ayant lieu à la fin de la phase de courant par impulsions (303, 403) a lieu en partant de l'intensité de courant maximale ($I_{max}$) jusqu'à l'intensité de courant de base ($I_G$) avec une dynamique d'au moins 200 A/ms.

6. Unité de commande de procédé de soudage à l'arc (204) selon une quelconque des revendications précédentes **caractérisée en ce que** l'unité de commande de procédé de soudage à l'arc (204) est réglée pour commander l'intensité de courant d'arc ($I_S$) en ce sens que lors d'une chute de l'intensité de courant d'arc ($I_S$) ayant lieu à la fin de la phase de courant par impulsions (303) une intensité de courant intermédiaire ($I_Z$), se situant en valeur entre l'intensité de courant de base ($I_G$) et l'intensité de courant maximale ($I_{max}$), est maintenue pendant une période de temps définie (304).

7. Unité de commande de procédé de soudage à l'arc (204) selon la revendication 6 **caractérisée en ce que** la période de temps définie (304) pendant laquelle l'intensité de courant intermédiaire ($I_Z$) est maintenue, se situe entre 0,1 ms et 0,5 ms.

8. Procédé de soudage par impulsions sous gaz inerte avec un appareil de soudage à l'arc (200) avec une électrode fusible (203) pour lequel le processus de soudage par impulsions comprend au moins une phase de courant à impulsions (303, 403) dans laquelle l'intensité de courant de l'arc ($I_S$) se situe au moins temporairement au-dessus de l'intensité de courant critique et une phase de courant de base (302, 402) dans laquelle l'intensité de courant de l'arc se situe à une intensité de courant de base ($I_G$), pour lequel l'intensité de courant de l'arc ($I_S$) est commandée de telle sorte que pendant la phase de courant par impulsions (303, 403) une intensité de courant maximale ($I_{max}$) est atteinte, pour lequel l'intensité de courant maximale ($I_{max}$) se situe au moins à 500 A et est maintenue au maximum pendant 0,5 ms et pour lequel l'augmentation de l'intensité de courant de l'arc ($I_S$) a lieu avec une dynamique d'au moins 900 A/ms en partant de l'intensité de courant de base ($I_G$) jusqu'à l'intensité de courant maximale ($I_{max}$) **caractérisé en ce que** la phase de courant à impulsions est initiée en fonction d'un court-circuit détecté en partant de la phase de courant de base.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5643479 A

**In der Beschreibung aufgeführte Nicht-Patentliteratur**

- **VON JOHN NORRISH.** Advanced welding processes - Technologies and process control. Woodhead Publishing Materials, 2006, 120-125